# EUROPEAN PATENT APPLICATION

(11) **EP 3 543 049 A1**
(43) Date of publication of application: **25.09.2019**
(21) Application number: 18162580.7
(22) Date of filing: 19.03.2018
(51) Int. Cl.: B60H 1/22, F24H 3/04, H05B 3/50

(54) **PTC RESISTOR HEATING ARRANGEMENT**

(71) Applicant: Mahle International GmbH, 70376 Stuttgart (DE)
(72) Inventor: MARLIER, Eric, 67120 Kolbsheim (FR); FEUGERE, Jacques, 68360 Soultz (FR); FUENTES, Nicolas, 68230 Wihr au val (FR)
(74) Representative: BRP Renaud & Partner mbB Rechtsanwälte Patentanwälte Steuerberater

(57) **Abstract**

The invention relates to a PTC resistor heating arrangement (1) comprising a plurality of PTC resistor stacks (3). A plurality of plate-shaped PTC resistor elements (4) is thereby is lined up/stacked in a row/on top of one another in the respective PTC resistor stack (3) in a stack direction (5) and are electrically contacted with one another on one side by means of a contact strip (6). The respective PTC resistor stacks (3) are arranged next to one another in a support housing (7).

According to the invention, the respective PTC resistor stacks (3) are in each case arranged in pairs and facing one another with the contact strip (6) to each form a PTC resistor module (2). On opposite support walls (7a, 7b), the respective PTC resistor module (2) further engages on its longitudinal ends (2a, 2b) with the support housing (7) in a positive manner by means of a detent assembly (8) each.

## Description

The invention relates to a PTC resistor heating arrangement comprising a plurality of PTC resistor stacks according to the preamble of claim 1.

PTC resistor heating arrangements are already known from the prior art. A PTC resistor heating arrangement thereby usually comprises a plurality of PTC resistor stacks, in which a plurality of plate-shaped PTC resistor elements is lined up/stacked in a row/on top of one another. The individual PTC elements are electrically connected to one another, so that a waste heat is generated in the PTC elements when applying a voltage. The respective PTC resistor stacks are arranged in a housing, which is usually made of plastic.

The PTC resistor stacks of the PTC resistor heating arrangement are produced automatically and are subsequently arranged and mounted manually in the housing. An automated arranging is thereby not possible due to the complex setup of the housing. This leads to an increase in effort and cost.

It is thus the object of the invention to specify an improved or at least an alternative embodiment for a PTC resistor heating arrangement of the generic type, in the case of which the described disadvantages are overcome.

According to the invention, this object is solved by means of the subject matter of independent claim 1. Advantageous embodiments are the subject matter of the dependent claims.

The present invention is based on the general idea of mounting PTC resistor stacks in a PTC resistor heating arrangement in an alternative manner and to thus provide for an automated arranging and mounting of the PTC resistor stacks. A generic PTC resistor heating arrangement has a plurality of PTC resistor stacks, whereby a plurality of plate-shaped PTC resistor elements is arranged together or stacked on top of one another in a stack direction in the respective PTC resistor stack. The plurality of PTC resistor elements is thereby electrically contacted with one another on one side by means of a contact strip in the respective PTC resistor stack. The respective PTC resistor stacks are also arranged next to one another in a support housing. According to the invention, the respective PTC resistor stacks are in each case arranged in pairs and facing one another with the contact strip to form a PTC resistor module in each case. On opposite support walls, the respective PTC resistor module further engages on its longitudinal ends with the support housing in a positive manner by means of a detent assembly each.

In the PTC resistor heating arrangement, the PTC resistor modules engage with the support housing in a common installation direction, so that the arranging and the mounting of the PTC resistor modules in the support housing can be carried out in a simplified and automated manner. The effort and costs for producing the PTC resistor heating arrangement can thus be reduced in an advantageous manner. The individual PTC resistor modules are further releasably mounted in the support housing by means of the detent assembly, so that the maintenance can also be carried out with less effort. In addition, the PTC resistor stacks are mounted to the support walls of the support housing only on their longitudinal ends and can have a distance to a bottom of the support housing and to one another. The waste heat generated in the PTC resistor stacks of the respective PTC resistor modules can thus in particular be discharged to the outside more effectively. The PTC resistor heating arrangement according to the invention is constructed of a plurality of PTC resistor modules, which are arranged in the support housing, whereby the number of the PTC resistor modules in the PTC resistor heating arrangement can vary, depending on the desired heat output. Provision can advantageously be made for the support housing to be made of plastic, preferably as an integrally formed plastic injection molded part. This provides for a cost-efficient production.

In a further development of the PTC resistor heating arrangement according to the invention, provision is made for the respective PTC resistor module to each have on its longitudinal ends a first detent contour of the respective detent assembly and for the support housing to each have on the opposite support walls a second detent contour of the respective detent assembly. The respective first detent contour and the respective second detent contour thereby engage with one another in an installation direction perpendicular to the stack direction. The arranging and the mounting of the PTC resistor modules in the support housing is possible in the installation direction in this way and can thus be automated. The effort and the costs for producing the PTC resistor heating arrangement can in particular be reduced in an advantageous manner.

On the outer side of the support housing, the respective second detent contour can advantageously be embodied integrally on the respective support wall and the respective contact strips of the respective module and the respective first detent contour can protrude from the respective support wall through a slit opening. The first detent contour and the second detent contour then engage with one another on the outer side of the support housing. In the slit opening, the respective PTC resistor module can thereby be supported on the support wall perpendicular to the stack direction and the dead weight of the respective PTC resistor module can be supported by the support housing. The detent assembly can in particular be relieved through this. The respective PTC resistor module can further be mounted in the slit opening on three sides in the slit opening perpendicular to the stack direction. The respective PTC resistor module can then engage exclusively in the installation direction and can thus be mounted by means of the detent assembly, as a result of which the setup of the detent assembly is significantly simplified and in particular a mechanical engagement is possible as well.

To simplify the detent assembly, the respective first detent contour can be made up to two identical first partial contours. The respective first partial contour can thereby in each case be molded on one of the PTC resistor stacks. The respective second detent contour can then be made up of two identical second partial contours, which are mounted to the respective support wall. The two PTC resistor stacks in the respective PTC resistor module can thus be produced separately from one another and can subsequently be arranged to form the PTC resistor module and can be mounted in the support housing. The effort and the costs for producing the PTC resistor heating arrangement can thus be reduced in an advantageous manner.

The respective first partial contour can advantageously be embodied integrally on the respective contact strip of the respective PTC resistor stack and the respective second partial contour on the respective support wall. The respective first detent contour can for example be formed by C-shaped grippers, each of which is aligned perpendicular to the installation direction and perpendicular to the stack direction and face away from one another, and the respective second detent contour can be formed in each case by two hooks, which are aligned in the installation direction and each other. In an engaged state, the C-shaped gripper can then engage behind a corresponding hook with a first section and can support itself on the corresponding support wall with a second section.

To prevent a short-circuit in the PTC resistor heating arrangement, the two contact strips in the respective PTC resistor module can be electrically insulated from one another by means of at least one plate-shaped insulating insert, which extends in the stack direction and in the installation direction. The insulating insert can thereby extend across a total length of the contact strips or in the stack direction only area by area. The at least one insulating insert can advantageously be formed by an insulating protrusion, which is embodied integrally on the respective support wall. The support housing or at least the insulating protrusion on the support housing is then advantageously molded of an electrical insulator- for example plastic.

To electrically contact the PTC resistor stack in the respective PTC resistor module, provision can be made in the respective PTC resistor module for a contact surface to be embodied integrally in the respective PTC resistor module on each of the two contact strips of the PTC resistor stacks. On one of the longitudinal ends of the PTC resistor module, the two contact surfaces then extend in the stack direction. For each of the two contact strips, the respective PTC resistor module can advantageously have a spacer, which is in each case pretensioned between the contact surface and the first detent contour. A heat expansion of the respective contact strip can be compensated by the spacer.

In summary, the PTC resistor modules in the PTC resistor heating arrangement according to the invention engage with the support housing, so that the arranging and the mounting of the PTC resistor modules in the support housing can be carried out in a simplified and automated manner. The effort and the costs for producing the PTC resistor heating arrangement can thus be reduced in an advantageous manner.

Further important features and advantages of the invention follow from the subclaims, from the drawings and from the corresponding figure description by means of the drawings.

It goes without saying that the above-mentioned features and the features, which will be described below, cannot only be used in the respective specified combination, but also in other combinations or alone, without leaving the scope of the present invention.

Preferred exemplary embodiments of the invention are illustrated in the drawings and will be described in more detail in the description below, whereby identical reference numerals refer to identical or similar or functionally identical components.

In each case schematically
- Fig. 1: shows a view of a PTC resistor heating arrangement comprising a total of four PTC resistor modules in a support housing;
- Fig. 2: shows a view of a contact strip of the PTC resistor heating arrangement according to the invention;
- Fig. 3: shows a view of the individual PTC resistor module of the PTC resistor heating arrangement according to the invention;
- Fig. 4: shows a frontal view onto a detent assembly of the PTC resistor heating arrangement according to the invention;
- Fig. 5: shows a view of the PTC resistor module, which is to engage with the support housing, of the PTC resistor heating arrangement according to the invention;
- Fig. 6: shows a side view of the PTC resistor module, which is to engage with the support housing;
- Fig. 7: shows a side view of the PTC resistor module, which engages with the support housing.

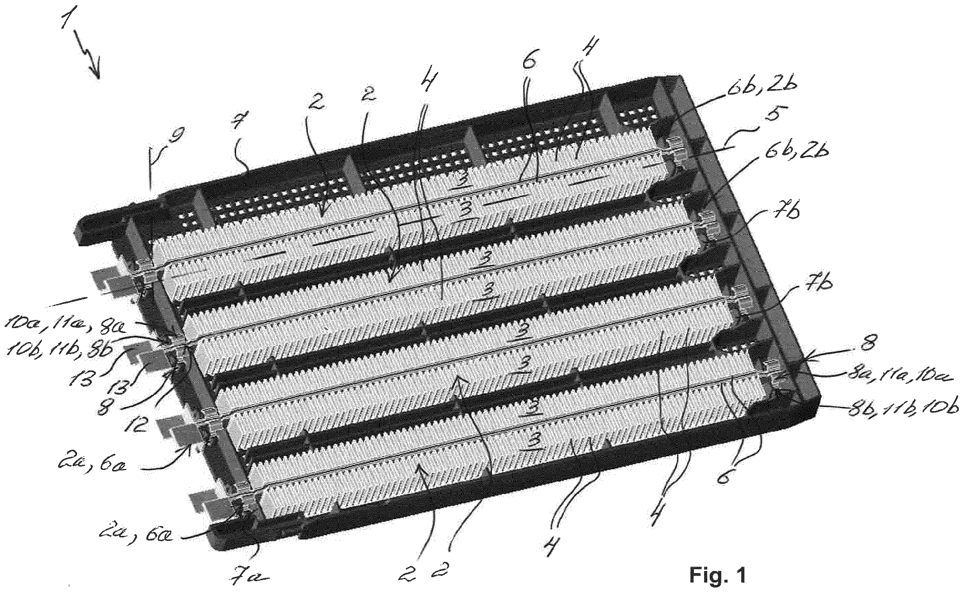

Fig. 1 shows a view of a PTC resistor heating arrangement 1 according to the invention. The PTC resistor heating arrangement 1 has a total of four PTC resistor modules 2, which are each made up of two PTC resistor stacks 3. In the respective PTC resistor stack 3, a plurality of plate-shaped PTC resistor elements 4 are arranged together or are stacked on top of one another, respectively, in a stack direction 5, and are electrically contacted with one another on one side by means of a contact strip 6. The respective PTC resistor stacks 3 are arranged in pairs and face one another with the contact strip 6 to form the respective PTC resistor module 2. Longitudinal ends 2a and 2b of the respective PTC resistor module 2 are thereby formed by longitudinal ends 6a and 6b of the two contact strips.

The respective PTC resistor modules 2 are arranged next to one another in a support housing 7 and on their longitudinal ends 2a and 2b - or on the longitudinal ends 6a and 6b, respectively, of the respective contact strips 6 - engage with opposite support walls 7a and 7b of the support housing 7 in a positive and releasable manner by means of a detent assembly 8 each. In this exemplary embodiment, the support wall 7b is an intermediate wall, which is arranged inside the support housing 7. On its longitudinal ends 2a and 2b - or on the longitudinal ends 6a and 6b, respectively, of the respective two contact strips 6 - the respective PTC resistor module 2 thereby in each case has a first detent contour 8a of the respective detent assembly 8, and, on the respective support walls 7a and 7b, the support housing 7 in each case has a second detent contour 8b of the respective detent assembly 8. The respective first detent contour 8a and the respective second detent contour 8b thereby engage with one another in an installation direction 9 perpendicular to the stack direction 5.

The first detent contour 8a is made up of two identical first partial contours 10a, which are embodied integrally on the respective contact strip 6. In this exemplary embodiment, the first partial contours 10a are identical C-shaped grippers 11a, which are aligned perpendicular to the stack direction 5 and perpendicular to the installation direction 9 and face away from one another. The second detent contour 8b is made up of two identical second partial contours 10b, which are two hooks 11b in this exemplary embodiment. The two hooks 11b are aligned in the installation direction 9 and are embodied integrally on the support housing 7 so as to face one another. The respective grippers 11a engage behind the respective hooks 11b, so that the respective PTC resistor module 2 engages with the support housing 7. In this exemplary embodiment, the second detent contour 8a is arranged on the outer side of the support housing 7, so that the two contact strips 6 of the respective PTC resistor module 3 protrude outwards on both sides through a slit opening 12, and the respective first detent contour 8a also engages with the respective second detent contour 8b on the outer side of the support housing 7.

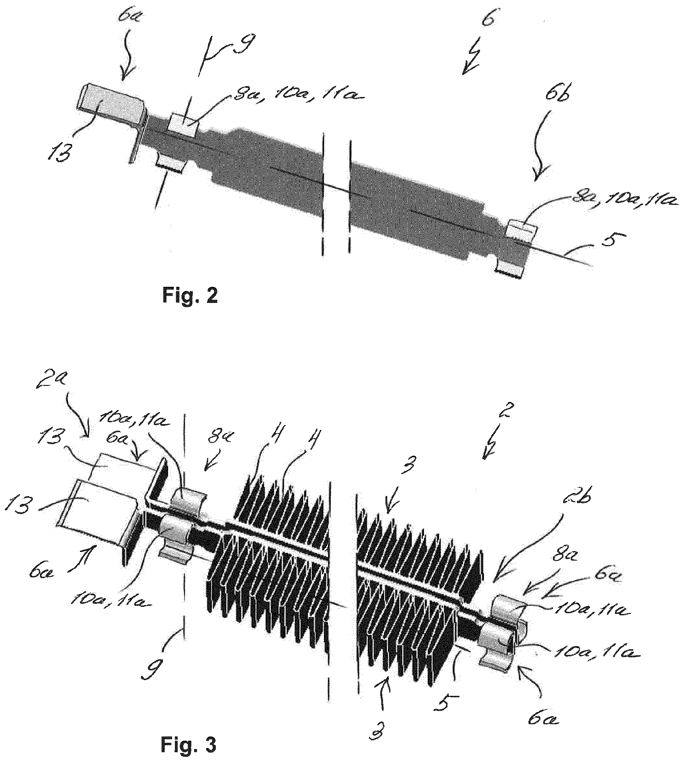

To electrically contact the PTC resistor stacks 3 in the respective PTC resistor module 2, a contact surface 13 is further embodied integrally in the respective PTC resistor module 2 on each of the two contact strips 6. The two contact surfaces 13 thereby extend in the stack direction 5 on the longitudinal end 2a of the PTC resistor module 2. The contact strips 6 are also electrically insulated from one another by means of an insulating insert - not visible here - so that a short-circuit between the two PTC resistor stacks 3 is prevented in the respective PTC resistor module 2. Further details with regard to the setup of the PTC resistor heating arrangement according to the invention are described in Fig. 2 to Fig. 7.

Fig. 2 shows a view of the contact strip 6 of the PTC resistor heating arrangement 1 according to the invention shown in Fig. 1. In the respective PTC resistor module 3, the contact strips are identical. On the two longitudinal ends 6a and 6b of the contact strip 6, the first partial contours 10a are additionally identical and are embodied as the C-shaped grippers 11a. In the case of the contact strips 6, which are embodied in this way, the effort and the costs for producing the PTC resistor heating arrangement 1 can in particular be reduced significantly.

Fig. 3 shows the PTC resistor module 2 of the PTC resistor heating arrangement 1 according to the invention shown in Fig. 1. As already described above, the first partial contours 10a, which form the first partial contour 8a of the detent assembly 8 in the PTC resistor module 2, are in each case embodied on the respective longitudinal ends 6a and 6b of the contact strip 6. The two PTC resistor stacks 3 are embodied identically and each have the contact strip 6 shown in Fig. 2. When arranging the PTC resistor stacks 3 to the PTC resistor module 2, one of the PTC resistor stacks 3 is then rotated by 180° about the stack direction and the PTC resistor module 2 is thus formed. The effort and the costs for producing the PTC resistor heating arrangement 1 can be reduced significantly by means of identically embodied PTC resistor stacks 3.

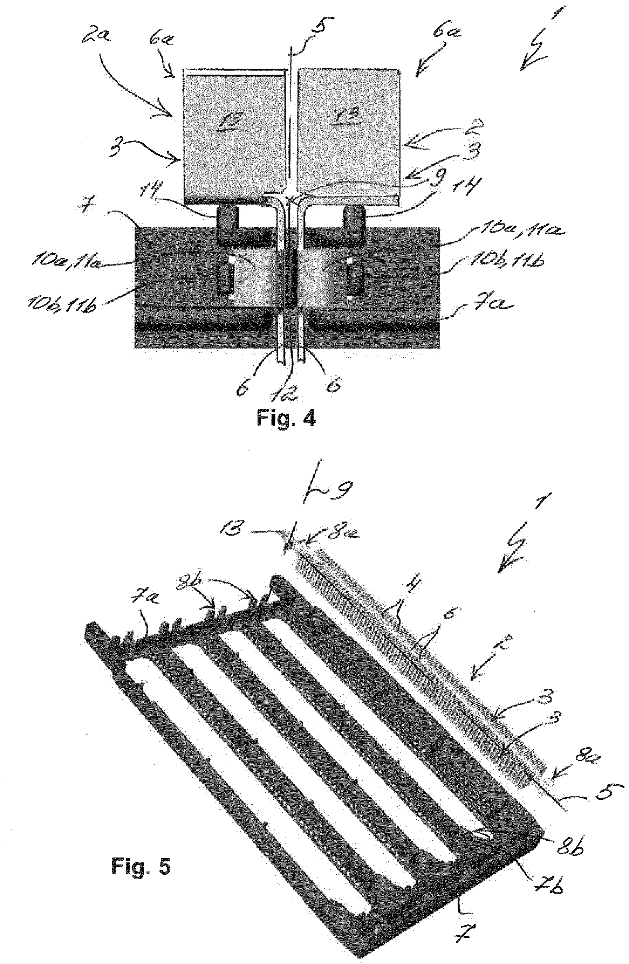

Fig. 4 shows a frontal view onto the detent assembly 8 comprising the first detent contour 8a and comprising the second detent contour 8b in an engaged state. The two contact strips 6 of the respective PTC resistor module 2 protrude through the slit opening 12 in the support wall 7a, and the respective second detent contour 8b engages with the first detent contour 8a on the outer side of the support housing 7. The two contact strips are mounted in the slit opening 12 on three sides perpendicular to the stack direction 5 and engage with the support housing 7 in the installation direction 9. The respective PTC resistor module 2 is thus supported on the support wall 7a perpendicular to the stack direction 5, and the dead weight of the respective PTC resistor module 2 is supported by the support housing 7. For each of the two contact strips 13, the respective PTC resistor module 2 further has a spacer 14, which is in each case pretensioned between the contact surface 13 and the first detent contour 8a. A heat expansion of the respective contact strip 6 can be compensated in an advantageous manner by means of the respective spacer 14.

To prevent a short-circuit in the PTC resistor heating arrangement 1, the two contact strips 6 are electrically insulated from one another in the respective PTC resistor module 2 by means of a plate-shaped insulating insert 14, which extends in the stack direction 5 and in the installation direction 9. The insulating insert 15 is formed by an insulating protrusion 16, which is embodied integrally on the respective support wall 7a. The support housing 7 is thereby advantageously molded of an electrical insulator - for example plastic.

Fig. 5 shows a view of the PTC resistor module 2, which is to engage with the support housing 7, in the PTC resistor heating arrangement 1 according to the invention. For arranging and for mounting the PTC resistor module 2 in the support housing 7, the PTC resistor module 2 needs to be arranged in the slit opening 12 and needs to engage with the support housing 7 by means of the detent assembly 8. The arranging and the mounting of the PTC resistor module 2 in the support housing 7 thereby occurs simultaneously in the installation direction 9 and can thus be automated. In particular the effort and the costs for producing the PTC resistor heating arrangement 1 can thus be reduced in an advantageous manner, because a manual arranging and a manual mounting of the respective PTC resistor modules 2 in the support housing 7 are forgone.

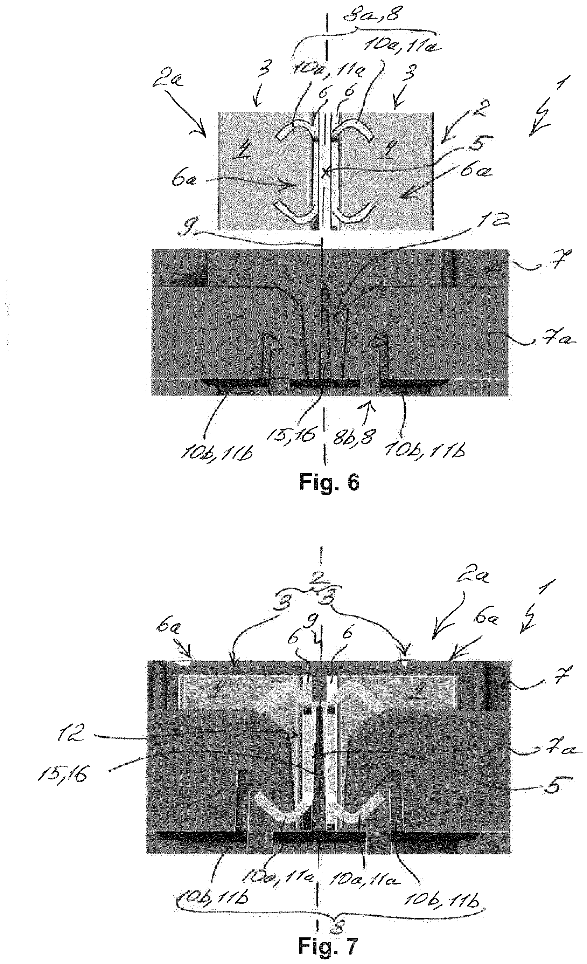

Fig. 6 shows a side view of the PTC resistor module 2, which is to engage with the support housing 7. Fig. 7 shows a side view of the PTC resistor module 2, which engages with the support housing 7. As already described above, the detent assembly 8 has the first detent contour 8a and the second detent contour 8b, which engage with one another. For this purpose, the respective PTC resistor module 2 is inserted into the support housing 7 in the installation direction 9 and the contact strips 6 are arranged in the slit opening 12. The first detent contour 8a and the second detent contour 8b simultaneously engage with one another. The grippers 11a embodied on the two contact strips 6 thereby engage behind the hooks 11b, which are embodied integrally on the support housing 7 or on the respective support wall 7a, respectively, and thus mount the PTC resistor module 2 in the support housing 7 in a positive manner. The two contact strips 6 are furthermore separated and thus electrically insulated from one another by means of the insulating insert 15 - here the insulating protrusion 16.

In summary, the PTC resistor modules 2 engage with the support housing 7 in a single installation direction 9 in the PTC resistor heating arrangement 1 according to the invention, so that the arranging and the mounting of the PTC resistor modules 2 in the support housing 7 is simplified. The arranging and the mounting of the PTC resistor modules 2 in the support housing 7 can further be carried out in an automated manner and the effort and the costs for producing the PTC resistor heating arrangement 1 can thus be reduced in an advantageous manner.

## Claims

1. A PTC resistor heating arrangement (1) comprising a plurality of PTC resistor stacks (3),
- wherein a plurality of plate-shaped PTC resistor elements (4) is lined up in a row or stacked on top of one another in the respective PTC resistor stack (3) in a stack direction (5),
- wherein the plurality of PTC resistor elements (4) is electrically contacted with one another on one side by means of a contact strip (6) in the respective PTC resistor stack (3), and
- wherein the respective PTC resistor stacks (3) are arranged next to one another in a support housing (7),
**characterized in**
- **that** the respective PTC resistor stacks (3) are in each case arranged in pairs and facing one another with the contact strip (6) to each form a PTC resistor module (2), and
- **that** on opposite support walls (7a, 7b), the respective PTC resistor module (2) engages on its longitudinal ends (2a, 2b) with the support housing (7) in a positive manner by means of a detent assembly (8) each.

2. The PTC resistor heating arrangement according to claim 1,
**characterized in**
- **that** the respective PTC resistor module (2) each has on its longitudinal ends (2a, 2b) a first detent contour (8a) of the respective detent assembly (8) and the support housing (7) each has on the opposite support walls (7a, 7b) a second detent contour (8b) of the respective detent assembly (8), and
- **that** the respective first detent contour (8a) and the respective second detent contour (8b) engage with one another in an installation direction (9) perpendicular to the stack direction (5).

3. The PTC resistor heating arrangement according to claim 2,
**characterized in**
- **that** on the outer side of the support housing (7), the respective second detent contour (8b) is embodied integrally on the respective support wall (7a, 7b), and
- **that** the respective contact strips (6) of the respective PTC resistor module (2) and the respective first detent contour (8a) protrude from the respective support wall (7a, 7b) through a slit opening (12), so that the first detent contour (8a) and the second detent contour (8b) engage with one another on the outer side of the support housing (7).

4. The PTC resistor heating arrangement according to claim 2 or 3,
**characterized in**
- **that** the respective first detent contour (8a) is made up to two identical first partial contours (10a), wherein the respective first partial contour (10a) is in each case molded on one of the PTC resistor stacks (3), and
- **that** the respective second detent contour (8b) is made up of two identical second partial contours (10b), wherein the respective second partial contours (10b) are mounted to the respective support wall (7a, 7b).

5. The PTC resistor heating arrangement according to claim 4,
**characterized in**
- **that** the respective first partial contour (10a) is embodied integrally on the respective contact strip (6) of the respective PTC resistor stack (3), and
- **that** the respective second partial contour (10b) is embodied integrally on the respective support wall (7a, 7b).

6. The PTC resistor heating arrangement according to one of claims 2 to 5,
**characterized in**
- **that** the respective first detent contour (8a) is formed by C-shaped grippers (11a), each of which is aligned perpendicular to the installation direction (9) and perpendicular to the stack direction (5) and face away from one another, and
- **that** the respective second detent contour (8b) is formed in each case by two hooks (11b), which are aligned in the installation direction (9) and face each other.

7. The PTC resistor heating arrangement according to claim 6,
**characterized in**
**that** in an engaged state, the C-shaped gripper (11a) engages behind a corresponding hook (11b) with a first section and supports itself on the corresponding support wall (7a, 7b) with a second section.

8. The PTC resistor heating arrangement according to one of the preceding claims,
**characterized in**
**that** the support housing (7) is made of plastic, preferably as an integrally formed plastic injection molded part.

9. The PTC resistor heating arrangement according to one of the preceding claims,
**characterized in**
**that** the two contact strips (6) in the respective PTC resistor module (2) are electrically insulated from one another by means of at least one plate-shaped insulating insert (15), which extends in the stack direction (5) and in the installation direction (9).

10. The PTC resistor heating arrangement according to claim 9,
**characterized in**
**that** the at least one insulating insert (15) is formed by an insulating protrusion (16), which is embodied integrally on the respective support wall (7a, 7b).

11. The PTC resistor heating arrangement according to one of the preceding claims,
**characterized in**
- **that** a contact surface (13) is embodied integrally in the respective PTC resistor module (2) on each of the two contact strips (6) of the PTC resistor stacks (3), and
- **that** the two contact surfaces (13) extend in the stack direction (5) on one of the longitudinal ends (2a, 2b) of the PTC resistor module (2).

12. The PTC resistor heating arrangement according to claim 11,
**characterized in**
**that** for each of the two contact strips (6), the respective PTC resistor module (2) has a spacer (14), which is in each case pretensioned between the contact surface (13) and the first detent contour (8a) to prevent an expansion of the respective contact strip (6).
